# EUROPÄISCHE PATENTANMELDUNG

(11) **EP 1 063 107 A1**
(43) Veröffentlichungstag der Anmeldung: **27.12.2000**
(21) Anmeldenummer: 00112747.1
(22) Anmeldetag: 16.06.2000
(51) Int. Cl.: B60G 17/015, B60T 8/48

(54) **Automatisierte Traktionshilfe bei Antriebsachsen mit mindestens einer luftgefederten Vor- oder Nachlaufachse**

(30) Priorität: 25.06.1999 DE 19929221
(71) Anmelder: MAN Nutzfahrzeuge Aktiengesellschaft, 80976 München (DE)
(72) Erfinder: Eder, Hans, Dipl.-Ing., 84072 Au/Hallertau (DE); Folger, Peter, Dipl.-Ing., 84051 Essenbach (DE)

(57) **Zusammenfassung**

Verfahren für eine automatisierte Traktionshilfe bei Antriebsachsen von Nutzfahrzeugen, mit mindestens einer luftgefederten Vor- oder Nachlaufachse, mit Drehzahlsensoren an mindestens den angetriebenen Rädern und einer Recheneinheit, die einen Schlupf mindestens über die Antriebsräder feststellen kann, dadurch gekennzeichnet, daß bei auftretendem Schlupf der Antriebsräder von der Recheneinheit sowohl aus dem Stand als auch während der Fahrt ein Signal ausgegeben wird, aufgrund dessen der Luftdruck in den Federbälgen der luftgefederten Vor- oder Nachlaufachse auf einen definierten Restdruck, je nach Beladung des Fahrzeuges, abgelassen wird.

## Beschreibung

Die Erfindung betrifft ein Verfahren nach dem Oberbegriff des Anspruches 1.

Ein Verfahren dieser Art ist aus der Patentschrift EP 0 796 750 bekannt. Der Gegenstand dieses Verfahrens ist eine Traktionshilfe bei einem Lastkraftwagen mit einer angetriebenen Hinterachse und einer Nachlaufachse, die beide über ein Blattfederpaket je Fahrzeugseite am Rahmen abgefedert sind. Zusätzlich ist Last über die Antriebsachse durch zwei Luftfederbälge, die zwischen den zwei Längsträgern angeordnet sind, abstützbar. Wenn nun über die Sensierung durch das Gewicht festgestellt wird, daß das Fahrzeug unbeladen ist und z. B. über den Tachometerantrieb, daß das Fahrzeug nicht fährt, werden die Luftfederbälge der Antriebsachse mit Druckluft beaufschlagt, so daß die Antriebsachse mehr Gewicht trägt und somit eine bessere Traktion für einen Anfahrvorgang hat.

Wenn über die Sensierung festgestellt wird, daß das Fahrzug beladen ist und nicht fährt, wird Luft aus den Luftfederbälgen abgelassen, so daß über die Blattfedern beide Achsen mit dem gleichen Gewicht beaufschlagt werden. Damit ist auf der Antriebsachse genügend Gewicht für eine gute Traktion.

Die Anmelderin hat in ihrem Fahrzeugprogramm bei Fahrzeugen mit Vor- oder/und Nachlaufachsen einen Schalter in der Armaturentafel für eine manuell schaltbare Anfahr- bzw. Traktionshilfe, mit der der Druck in den Luftfederbälgen der Vor- oder Nachlaufachsen auf einen Restdruck von 0,2 bis 0,3 bar Überdruck abgelassen werden kann. Dadurch wird die Antriebsachse höher belastet und hat deshalb eine bessere Traktion. Nach ca. 90 Sekunden, neuerdings über einer Geschwindigkeit von 30 km/h, wird automatisch wieder Druckluft in die Luftfederbälge gelassen, so daß die Vor- oder Nachlaufachse wieder den normalen Gewichtsanteil trägt.

Ergänzend sei noch erwähnt, daß bei einem Fahrzeug, das eine Liftachse hat, die Liftachse permanent angehoben sein kann, wenn das Gewicht, statisch gemessen, auf der Antriebsachse 11 Tonnen nicht überschreitet. Es wird auch empfohlen, die Luftfederbälge der Vor- oder Nachlaufachse mit etwa 0,2 bis 0,3 bar zu beaufschlagen, wenn das Fahrzeug unbeladen oder teilbeladen ist, um die Seitenführung des Fahrzeugs zu verbessern.

Aufgabe der Erfindung ist es, eine automatische Zu- und Abschaltung der Traktionshilfe im richtigen Moment zu erreichen.

Die Aufgabe wird erfindungsgemäß durch die Merkmale des Verfahrens nach Anspruch 1 gelöst.

Dadurch, daß bei auftretendem Schlupf der Antriebsräder, vorzugsweise durch die Verwendung des Signales für den Beginn eines Antischlupfregelungs-Vorganges (ASR-Vorgang), automatisch, durch das Ablassen der Druckluft in den Luftfederbälgen bis auf einen Restdruck von etwa 0,1 bar Überdruck und höherem Überdruck, je nach Beladung des Fahrzeuges und zulässiger Traglast der Antriebsachse, die Tragwirkung der Vor- oder Nachlaufachse vermindert bis aufgehoben wird, wird die Antriebsachse höher belastet. Durch diese Automatik wird erreicht, daß die höhere Belastung der Antriebsachse rechtzeitig erfolgt und sich die Antriebsräder durch überhöhten Schlupf nicht eingraben können, oder daß durch den Eingriff an den Bremsen, oder durch die Rücknahme der Einspritzmenge am Motor durch ASR, das Fahrzeug stehen bleibt. Durch das rechtzeitige, fahrerunabhängige Eingreifen der genannten Regelautomatik wird vielmehr die Wirkung von ASR unterstützt, weil sich der Schlupf der Antriebsräder durch die höherwerdende Last an den Antriebsrädern verringert.

Die Anzahl der ASR-Vorgänge kann durch die automatisierte Traktionshilfe, je nach Straßensteigung, Länge der Steigung, Straßenoberfläche, wie z. B. Schnee, Eis, Asphalt, ebenfalls verringert werden. Beispielsweise kann an einer langen Steigung mit Schnee-/Eisbelag mit Traktionshilfe nur ein ASR-Vorgang ausgelöst werden, während ohne Traktionshilfe mehrere ASR-Vorgänge ausgelöst werden würden.

Die beste Wirkung der automatisierten Traktionshilfe ist bei fahrendem Fahrzeug.

Aber auch aus dem Fahrzeugstillstand heraus ist die automatisierte Traktionshilfe vorteilhaft und entlastet in beiden Fällen den Fahrzeugführer, der sich in den dann meistens kritischen Fahrsituationen mehr dem Fahrgeschehen und der Fahrzeugdynamik widmen kann.

Die verringerte Tragfunktion der Vor- oder Nachlaufachse kann, wie bei der bisherigen manuellen Bedienung, zeitlich begrenzt sein, z. B. auf 90 Sekunden, es können aber auch mehrere Minuten sein.

Vorzugsweise erfolgt die Abschaltung der Traktionshilfe, unterhalb der Geschwindigkeit von 30 km/h, abhängig von der Betätigung einer Bremse. Wird eine Bremse betätigt, z. B. die Motorbremse, dann können die Luftfederbälge wieder mit dem Regeldruck, der sich aus der Beladung ergibt, beaufschlagt werden.

Dies hat den Vorteil, daß bei Betätigung der Reibungsbremse auch die Bremskraft der Vor- oder Nachlaufachse voll zur Verfügung steht.

Zusätzlich muß die Forderung des Gesetzgebers, daß ab einer Geschwindigkeit von 30 km/h und darüber die Traktionshilfe abgeschaltet wird, erfüllt werden. Dies kann bei längeren Steigungsstrecken mit unterschiedlichen Reibungskoeffizienten über die Länge der Strecke, z. B Teer, Schnee, Eis zu mehreren ASR-Regelvorgängen führen. Dies bedeutet aber auch, daß die Traktionshilfe mehrfach zu- und abgeschaltet werden kann. Das kritische Zuschalten der Traktionshilfe erfolgt im Falle, daß das Zuschaltsignal vom ASR-Vorgang verwendet wird, ruckfrei, da das Signal rechtzeitig kommt. Dies gilt natürlich nur unter einer Geschwindigkeit von 30 km/h.

Das Abschalten der Traktionshilfe ist unkritisch vom Vorgang her selbst. Wichtig ist nur, daß für einen Bremsvorgang mit der Reibungsbremse die Traktionshilfe abgeschaltet ist, damit die ABS-Regelung auslegungsgerecht funktionieren kann.

Für Fahrten im Stau genügt auch das Signal vom Bremspedal für das Einschalten einer Bremse zum Abschalten der Traktionshilfe, da im Stau immer eine der Bremsen betätigt werden muß.

Für Bergabfahrten im Anschluß an eine Bergauffahrt mit Traktionshilfe ist das Abschaltsignal für die Traktionshilfe natürlich das Signal vom Bremspedal das geeignetste. Es ist aber auch das Zeitsignal, vorzugsweise 90 Sekunden als Zeitdauer für die Traktionshilfe, sowohl bei Bergauffahrt als auch in einer anschließenden Bergabfahrt, als Signal geeignet.

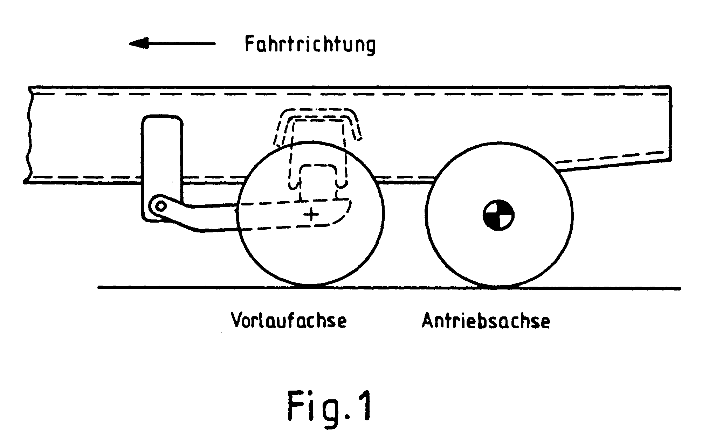

Die Figur zeigt schematisch die Anordnung einer Antriebs- und Vorlaufachse in einem Nutzfahrzeug.

## Patentansprüche

1. Verfahren für eine automatisierte Traktionshilfe bei Antriebsachsen von Nutzfahrzeugen, mit mindestens einer luftgefederten Vor- oder Nachlaufachse, mit Drehzahlsensoren an mindestens den angetriebenen Rädern und einer Recheneinheit, die einen Schlupf mindestens über die Antriebsräder feststellen kann, dadurch gekennzeichnet, daß bei auftretendem Schlupf der Antriebsräder von der Recheneinheit sowohl aus dem Stand als auch während der Fahrt ein Signal ausgegeben wird, aufgrund dessen der Luftdruck in den Federbälgen der luftgefederten Vor- oder Nachlaufachse auf einen definierten Restdruck, je nach Beladung des Fahrzeuges, abgelassen wird.

2. Verfahren nach Anspruch 1, dadurch gekennzeichnet, daß als Signal für das Einschalten der Traktionshilfe das Signal für den Beginn eines Antischlupfregelungs-Vorganges (ASR-Vorgang) verwendet wird.

3. Verfahren nach den Ansprüchen 1 und 2, dadurch gekennzeichnet, daß ab einer Fahrzeuggeschwindigkeit von 30 km/h und darüber automatisch die Traktionshilfe abgeschaltet wird und damit die Luftfederbälge wieder mit dem Betriebsdruck beaufschlagt werden.

4. Verfahren nach einem oder mehreren der vorhergehenden Ansprüche, dadurch gekennzeichnet, daß bei Betätigung einer Bremseinrichtung die Traktionshilfe automatisch durch das Bremssignal abschaltbar ist.

5. Verfahren nach einem oder mehreren der vorhergehenden Ansprüche, dadurch gekennzeichnet, daß nach einer Zeit von bis zu 5 Minuten, vorzugsweise 90 Sekunden, die Traktionshilfe automatisch abschaltbar ist, wenn die Fahrzeuggeschwindigkeit von 30 km/h nicht erreicht wird.

6. Verfahren nach einem oder mehreren der vorhergehenden Ansprüche, dadurch gekennzeichnet, daß die Traktionshilfe von 0 - 30 km/h auch manuell zu- und abschaltbar ist.
